# EUROPEAN PATENT APPLICATION

(11) **EP 4 756 486 A1**
(43) Date of publication of application: **10.06.2026**
(21) Application number: 24217179.1
(22) Date of filing: 03.12.2024
(51) Int. Cl.: G01S 7/481, G01S 17/08, G01S 17/42

(54) **LIDAR SENSOR FOR MEASURING THE RANGE TO AN OBJECT AND METHOD OF ASSEMBLING SUCH A SENSOR**

(71) Applicant: Scantinel Photonics GmbH, 89077 Ulm (DE)
(72) Inventor: Egger, Daniel, 89182 Bernstadt (DE); Gindele, Frank, 85301 Schweitenkirchen (DE); Steinbach, Sven, 89250 Senden (DE)
(74) Representative: Ostertag & Partner Patentanwälte mbB

(57) **Abstract**

A LiDAR sensor (10) for measuring the range to an object by emitting measuring light (31) comprises a base (12), a photonic integrated circuit (16) supported by the base (12), a lid (20) attached to the base (12) and covering the photonic integrated circuit (16), and a heat transfer element (30) sandwiched between the photonic integrated circuit (16) and the lid (20). A soft thermal interface material (32) is sandwiched between the photonic integrated circuit (16) and the heat transfer element (30). The heat transfer element (30) is slidably guided in an opening (28) in the lid (20), and/or the lid (20) is slidably guided on the base (12), so that an axial position of the heat transfer element (30) is only determined by the thermal interface material (32). In this way, the thickness of the thermal interface material (32) does not depend on tolerances and can thus be kept to a minimum. This results in a very low thermal resistance of the thermal interface material.

## Description

### BACKGROUND OF THE INVENTION

### 1. Field of the Invention

The invention generally relates to sensors that measure the range to vehicles or other objects. Such measurements may be based on the FMCW LiDAR principle. In particular, the invention relates to the problem of thermal management in such sensors that contain a photonic integrated circuit (PIC).

### 2. Description of Related Prior Art

Frequency-modulated continuous wave (FMCW) is a range and velocity measuring technology which was originally developed for RADAR applications. If light instead of radio waves are used, this technology is usually referred to as FMCW LiDAR, in which LiDAR is an acronym for "Light Detection And Ranging".

In an FMCW LiDAR sensor, a frequency-modulated ("chirped") light beam scans the environment. A small fraction of the light is diffusely reflected at the object, received by the sensor and superimposed with a local oscillator wave. The frequency difference between the two signals, which is usually referred to as beat frequency, is measured and used to compute the range R of the object. It is also possible to compute the radial relative velocity *v* based on the Doppler frequency shift that is observed in the presence of a relative velocity.

Sensors based on this measurement principle must be very robust and reliable if they are to be used in vehicles. This is particularly true if the vehicles drive autonomously, since the safety in autonomous driving is decisively dependent on the sensor that is used to generate a three-dimensional profile of the environment. Sensors containing photonic integrated circuits (PIC) do not require moving components and are therefore particularly suitable for applications in vehicles.

A sensor using a PIC is disclosed, for example, in US 2022/20334227 A1. The PIC includes a distribution matrix comprising a plurality of optical switches that are arranged as a binary tree. This distribution matrix distributes the optical signals among different free space couplers that emit the optical signal into free space. The free space couplers are arranged in a front focal plane of a lens that directs the optical signals optical waveguides in different directions.

If such devices are to be used in vehicles, they should be able to measure ranges of up to a few hundred meters. Such long ranges require light beams having a high radiant power. Since light losses within the PIC are inevitable at least to some extent, the thermal management of the sensor becomes a major issue.

US 2024/0159874 A1 discloses a chip packaging for a LiDAR sensor that comprises a laser assembly, a semiconductor optical amplifier (SOA) chip and a transceiver chip coupled to the laser assembly and the SOA chip. The transceiver chip emits the beam through an optical window and receives a reflected beam from an object through the same optical window. The chip packaging includes a base plate, from which a side wall extends upward, and a lid covering the base plate so that the optical components are enclosed in a hermetic seal. The side wall is provided with electrical wiring that connects the transceiver chip with the outside. Placed on top of the lid is a cold plate that may be formed as a heat sink, a heat pipe, or a vapor chamber that provides an active cooling effect to the lid and the base plate. A heat transfer component is coupled to the top surface of the SOA chip such that it is placed between the SOA chip and the lid for heat dissipation. The heat transfer component may be a thermal interface material, a thermoelectric cooler (TEC), a liquid cooling system, or combinations thereof.

However, it has been found that this chip packaging still does not ensure sufficient heat transfer away from the photonic integrated circuit in sensors that emit radiation with a very high radiant power.

### SUMMARY OF THE INVENTION

It is therefore an object of the present invention to provide a LiDAR sensor for measuring the range to an object having an improved thermal management. It is also an object of the invention to provide a method of assembling such a LiDAR.

Regarding sensor, this object is achieved by a LiDAR sensor for measuring the range to an object by emitting measuring light, wherein the sensor comprises a base, which is preferably planar, a photonic integrated circuit supported by the base, and a lid attached to the base and covering the photonic integrated circuit. A heat transfer element, which is preferably planar as well and may be made of metal or a metal alloy, is sandwiched between the photonic integrated circuit and the lid. A soft thermal interface material is sandwiched between the photonic integrated circuit and the heat transfer element. The latter is slidably guided in an opening in the lid, and/or the lid is slidably guided on the base, so that an axial position of the heat transfer element is only determined by the thermal interface material.

The invention is based on the conception that a decisive factor for increasing the heat transfer between the photonic integrated circuit and the lid is the thickness of the thermal interface material (TIM). Thermal interface materials are gap fillers that conduct heat between two or more solid mating surfaces. By filling gaps caused by unevenness, tolerances or roughness of the surfaces, the TIMs ensure that no air, which is a very poor heat conductor, is trapped between the mating surfaces. By transporting excess heat from an electronic device towards a heat sink or dissipator, TIMs help prevent damage or malfunction due to overheating.

TIMs are available in a variety of forms, including thermally conductive gels, pastes, greases or adhesives, soft silicone pads containing heat conductive fillers, thermal tapes or phase change materials (PCM). However, compared to rigid materials such as copper or silver, the thermal conductivity of TIMs is poor. While copper has a thermal conductivity of about 400 W/m·K, typical TIMs such as ELASTOSIL^{®} have a thermal conductivity of less than 20 W/m·K.

It follows that the TIM layer should be as thin as possible, because the thermal resistance directly depends on the thickness of a material. The inventors discovered that in conventional package designs, the TIM layer is usually thicker than necessary. This is because the width W of the gap that must be bridged by the TIM between the top surface of the photonic integrated circuit and the heat transfer element is determined by manufacturing tolerances of the photonic integrated circuit and the heat transfer element, and of any rigid components that are placed "between" these two components, such as the lid to which the heat transfer element is attached. As the manufacturing tolerances of all these components add up, the width W of the gap filled by the TIM can vary considerably.

If the gap width W is very large, the thermal resistance of the TIM will also be very large, and it may not be possible to achieve sufficient heat transfer. This can be overcome either by reducing the radiant power of the sensor or by adding special, but expensive heat sinks, for example heat sinks using water or oil as lower temperature fluid.

According to the invention, the width W is not determined by the manufacturing tolerances. Instead, the axial position of the heat transfer element is only determined by the thermal interface material. In other words, the heat transfer element can be freely moved along the axial direction while the heat transfer element contacts the thermal interface material during the assembly of the sensor. This allows the heat transfer element and the photonic integrated circuit to be pressed together, with the TIM sandwiched between these two components, so that the TIM layer has a minimum thickness and just fills any voids or gaps between the two components. During this process, there are no mechanical stops to prevent the heat transfer element and the photonic integrated circuit from coming as close together as possible. To support this process, the TIM should be sufficiently soft.

As a result, the TIM layer will be very thin, irrespective of manufacturing tolerances of the other components of the sensor. This reduces the thermal resistance of the TIM layer and significantly improves heat transfer from the photonic integrated circuit to the heat transfer element. The latter can then transfer the heat further to the lid and/or to an external heat sink and/or to a thermoelectric cooler (TEC) that is based on the Peltier effect.

In an embodiment, the lid comprises a cover member and a side wall extending from the cover member along the axial direction. Usually both the base and the cover member will be rectangular so that the side wall comprises four wall sections. If the cover member is disk shaped, the side wall will be ring shaped. Providing the lid - rather than the base - with a side wall is advantageous, because the base is usually made from a ceramic, while the lid may be made from a metal alloy such as Kovar^{®}. It is usually easier to form a cup-shaped lid from such a metal alloy than from the ceramic material of the base.

However, it is also possible to provide the base with the side wall, as this is known in the art, and this may be preferred if the base is not made of ceramic.

The side wall - irrespective whether it is part of the lid or of the base - may comprise a window that is transparent for the measuring light. Such a window may be formed by a saphire element, for example. If no window is provided, the side wall may have an opening, but this does not offer protection against dust and moisture. In other embodiments, the window for the measuring light is provided in a cover member of the lid or in the base, as this is known in the art as such.

The heat transfer element is preferably made of a metal or metal alloy such as CuMo or CuW, which ensures excellent heat conduction.

If the heat transfer element is slidably guided in an opening in the lid, the latter may rest on the base or on a structure that is fixedly attached to the base. This construction ensures a high stability in the axial direction. Without such a form fit, axial stability must be ensured by adhesives, for example. The structure that is fixedly attached to the base may be a ring that encloses the base, for example.

Preferably, the lid rests on the base or on a structure that is fixedly attached to the base before the heat transfer element contacts the TIM during assembly of the sensor. This simplifies the assembly, as the lid is already in its final position before the heat transfer element is pressed on the TIM layer. In principle, however, it is also possible that heat transfer element is received in the opening of the lid with a tight fit. Then both elements are pressed down during assembly. At a certain instance, which may be even after the heat transfer element contacts the TIM, the lid abuts on the base or the structure, but the heat transfer element may advance further through the opening in the lid until it has reached its final axial position.

In embodiments in which the lid is slidably guided on the base, the heat transfer element may be fixedly attached to the lid when the lid glides on the base during assembly of the sensor. In other words, the heat transfer element is first attached to the lid, and then the combination of lid and heat transfer element glides on the base until the heat transfer elements reaches its final position with minimal thickness of the TIM layer. This approach is advantageous because the heat transfer element can be attached to the lid in a separate process step so that an optimum contact and minimum heat resistance are achieved. This may be accomplished by providing another TIM layer between the lid and the heat transfer element.

If the lid comprises a cover member and a side wall as mentioned above, the side wall may slide over a side surface of the base when the lid glides on the base during assembly of the sensor. This is a particularly simple way to achieve the sliding property. Alternatively, the base may contain a groove into which the side wall engages. If the lid does not comprise a side will, the lid may slide within the side wall of the base.

In some embodiments, vias extend through a bottom portion of the base that provide for an electrical connection between the photonic integrated circuit and components outside the sensor. This is advantageous because the area of the bottom portion of the base is usually much larger than the area of the side wall. Consequently, it is easier to accommodate a plurality of electrical connections in the base than in the side wall.

The photonic integrated circuit, which shall be cooled by the heat transfer element, may comprise at least one semiconductor optical amplifier, because such amplifiers produce most of the excess heat that must be removed to the outside. In other embodiments, the photonic integrated circuit comprises a plurality of light emitters, which are configured to emit the measuring light, optical switches and detectors that receive the incoming light that was reflected from the object. In still other embodiments, the photonic integrated circuit is realized as a hybrid device which comprises light emitters, optical switches and detectors and also additional components, for example a laser and a semiconductor optical amplifier, which are bonded to the same substrate. This increases the level of integration and eliminates the need for optical fibers, optical benches and electrical wiring to establish optical and electrical connections between different devices within the packaging.

With regard to the method, the aforesaid object is achieved by a method of assembling a LiDAR sensor for measuring the range to an object that comprises the following steps:
a) providing a base;
b) securing a photonic integrated circuit to the base;
c) providing a lid covering the photonic integrated circuit;
d) applying a soft thermal interface material on the photonic integrated circuit; and
e) pressing a planar heat transfer element on the thermal interface material by sliding the heat transfer element through an opening of the lid, or by sliding the lid on the base, along an axial direction perpendicular to the base.

### BRIEF DESCRIPTION OF THE DRAWINGS

Various features and advantages of the present invention may be more readily understood with reference to the following detailed description taken in conjunction with the accompanying drawings in which:
- Figure 1: is an exploded view of a sensor in accordance with a first embodiment of the invention;
- Figure 2: is a perspective view of the sensor shown in Figure 1 in the fully assembled state;
- Figures 3a and 3b: are schematic cross sections through the sensor shown in Figures 1 and 2 during and after assembly;
- Figure 3c: corresponds to Figure 3b, but shows an additional heat sink and TEC element placed on top of the lid of the sensor;
- Figures 4a and 4b: are schematic cross sections through a sensor according to a second embodiment during and after assembly;
- Figure 5: is a schematic cross section through a sensor according to a third embodiment after assembly,
- Figure 6: is a schematic cross section through a sensor according to a fourth embodiment after assembly, and
- Figure 7: is a schematic cross section through a sensor according to a fifth embodiment after assembly.

### DESCRIPTION OF PREFERRED EMBODIMENTS

### 1. First embodiment

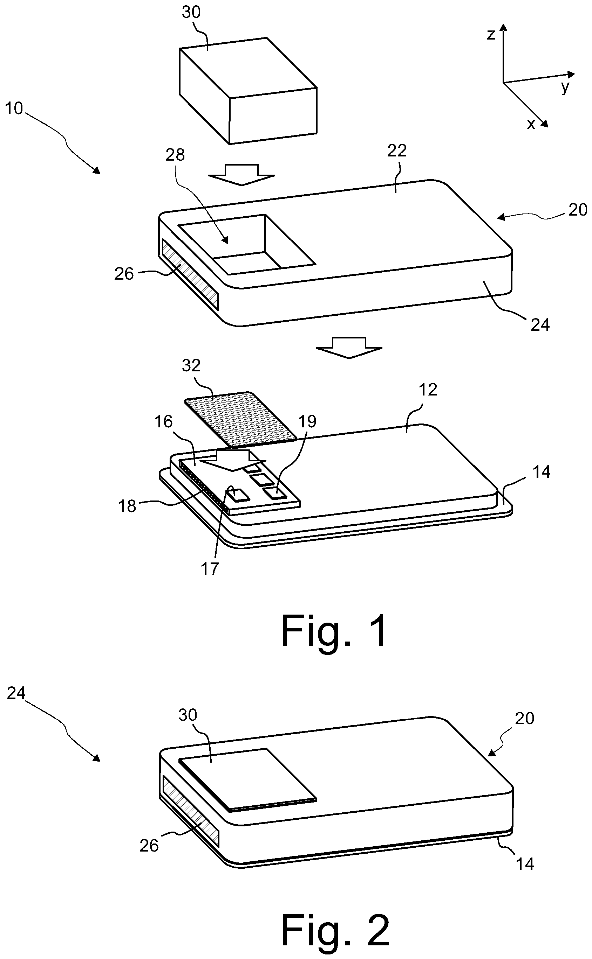

Figure 1 is an exploded view of a sensor 10 in accordance with a first embodiment of the invention. The sensor 10 comprises a ceramic base 12 to which a ring 14 made of Kovar^{®} and surrounding the base 12 is fixedly attached. The base 12 is formed as a plate and may be provided on its underside with a thin gold metallization (not shown) for soldering the base 12 to a larger structure, for example a metal housing that accommodates the sensor 10 and other devices such as a 1D scanner and a lens.

The base 12 supports a photonic integrated circuit (PIC) 16 that comprises in this embodiment a plurality of plurality of light emitters 18 configured to emit the measuring light. The light emitters 18 also serve as light receiving elements collecting measuring light that was reflected at an object whose range is to be measured. In other embodiments, the light emitting and the light receiving elements are distinct.

The PIC 16 may be a hybrid device that also includes a heterogeneously integrated laser chip 17 and one or more semiconductor optical amplifier chips 19 that are bonded to the substrate of the PIC 16. These additional chips may be mounted upside down in recesses that are formed in the substrate, as this is described in earlier European patent application EP 24176176.6 filed 24 June 2024 (not yet published).

The sensor 10 further comprises a lid 20 which covers the photonic integrated circuit 16 and provides a hermetic seal. In this embodiment, the lid 20 is also made of Kovar^{®} and comprises a planar cover member 22 and a side wall 24 extending along an axial direction z and comprising four wall sections so that the cover member 22 is completely surrounded by the side wall 24. One section of the side wall 24 is provided with a saphire window 26 which is transparent to the measuring light emitted by the emitters 18 of the PIC 16. The saphire window 26 fits tightly into an opening in the side wall 24 so that no dust or moisture can enter the lid 20.

The cover member 22 of the lid 20 is provided with an opening 28 which is shaped to match the contour of a planar heat transfer element 30. In this embodiment, the heat transfer element 30 is made of an CuMo or CuW alloy and has a cuboid shape. Such materials have a very high thermal conductivity which is typically between 180 and 300 W/m·K.

The sensor 10 further comprises a thermal interface material (TIM) 32 that may be formed as a thermally conductive pad or paste. The TIM 32 is placed between the PIC 16 and the heat transfer element 30 and ensures that no gaps or voids remain between the mating surfaces of these two components.

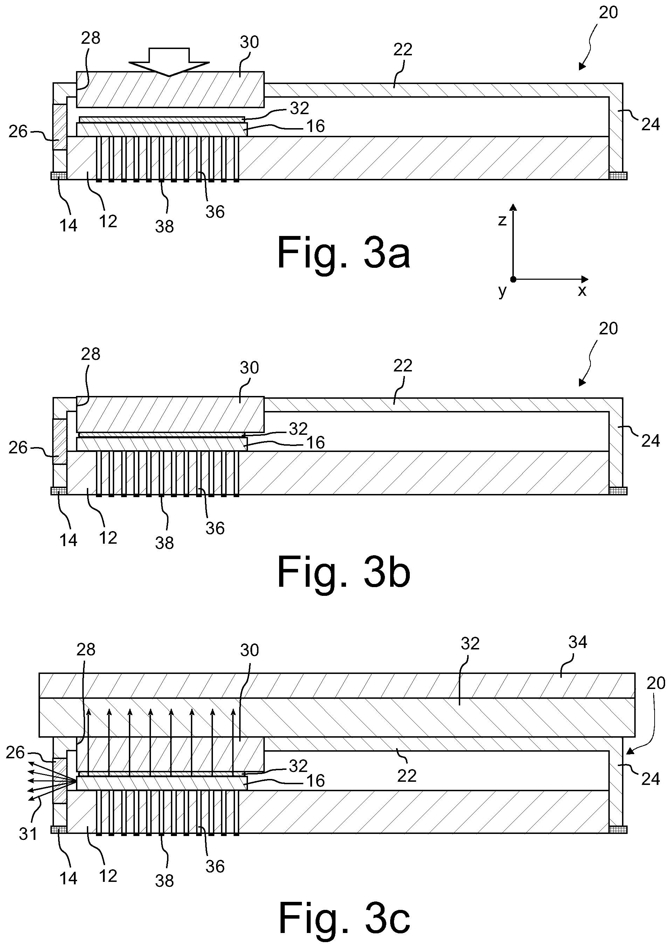

Figure 2 shows the sensor 10 in the assembled state, and Figure 3b is a schematic cross section through the sensor 10 shown in Figure 2. As can best be seen in Figure 3b, the heat transfer element 30 is sandwiched between the photonic integrated circuit 16 and the lid 20, and the thermal interface material 32 is sandwiched between the photonic integrated circuit 16 and the heat transfer element 30.

### 2. Assembly

The assembly of the sensor 10 will now be described with reference to the exploded view of Figure 1 and to Figures 3a and 3b.

In a first step, the PIC 16 is secured to the base 12. This may be accomplished, for example, by soldering using an SAC solder, wherein SAC is an acronym for Sn-Ag-Cu and denotes a lead-free alloy consisting of tin, silver and copper. The TIM 32 is then placed or distributed on the top surface of the PIC 16, see lower part of Figure 1. In the next step, the lid 20 is placed over the base 12 supporting the PIC 16. The side wall 24 of the lid 20 will finally abut on the ring 14. In this final position the window 26 is axially placed such that measuring light 31 emitted from the light emitters 18 can pass through the window 26, see Figure 3c.

Now the heat transfer element 30 is inserted into the opening 28, see upper part of Figure 1 and Figure 3a, until the heat transfer element 30 gets in contact with the TIM 32. While the heat transfer element 30 is pressed on the TIM 32, a force is applied that is sufficient to reduce the thickness of the TIM 32 to a minimum value. This results in a very small thermal resistance of the TIM 32 so that the excess heat produced in the PIC 16 can be easily transferred to the heat transfer element 30 via the TIM 32.

In an alternative approach, the heat transfer element 30 is pre-mounted in the lid 20 with a tight fit. After the lid 20 is placed on the base 12 and rests on the ring 14, the heat transfer element 30 is pressed further down through the opening 28. A tight fit has the advantage of achieving a better heat transfer between the heat transfer element 30 and the lid 20.

Cooling of the heat transfer element 30 can be achieved either by direct contact between the heat transfer element 30 and a heat sink, or indirectly via the lid 20. If the heat transfer element (slightly) projects over the surface of the cover member 22 of the lid 20, as this can be seen in Figures 2 and 3b, a heat sink may be placed on top of the heat transfer element 30, preferably with an additional TIM layer in between.

Figure 3c shows a situation in which the heat transfer element 30 was pre-mounted as described above and does not project over the lid 20. In this case, a heat sink 32 may be attached (also preferably with an additional TIM layer) to the cover member 22 of the lid 20. The excess heat from the PIC 16 is then transferred via the heat transfer element 30 and the lid 20 to the heat sink 32 in which it is spread.

In the embodiment shown in Figure 3c, a thermoelectric cooler (TEC) 34, which is based on the Peltier effect, is placed above the heat sink 32 and receives the heat spread by the heat sink 32, as this is indicated by arrows. With such a TEC 34 it is possible to establish a closed-loop control which ensures that the temperature of the PIC 16 is kept within a desired range. A TEC 34 can also be used to heat the PIC 16 if this is necessary in certain environments or whether conditions.

In the cross sections of Figures 3a to 3c, it can be seen that a bottom portion of the base 12 comprises a plurality of vias 36 extending axially through the base 12. The vias 36 terminate in contacts 38 on the underside of the base 12, thereby providing an electrical connection between the PIC 16 and components external to the sensor 10.

### 3. Further embodiments

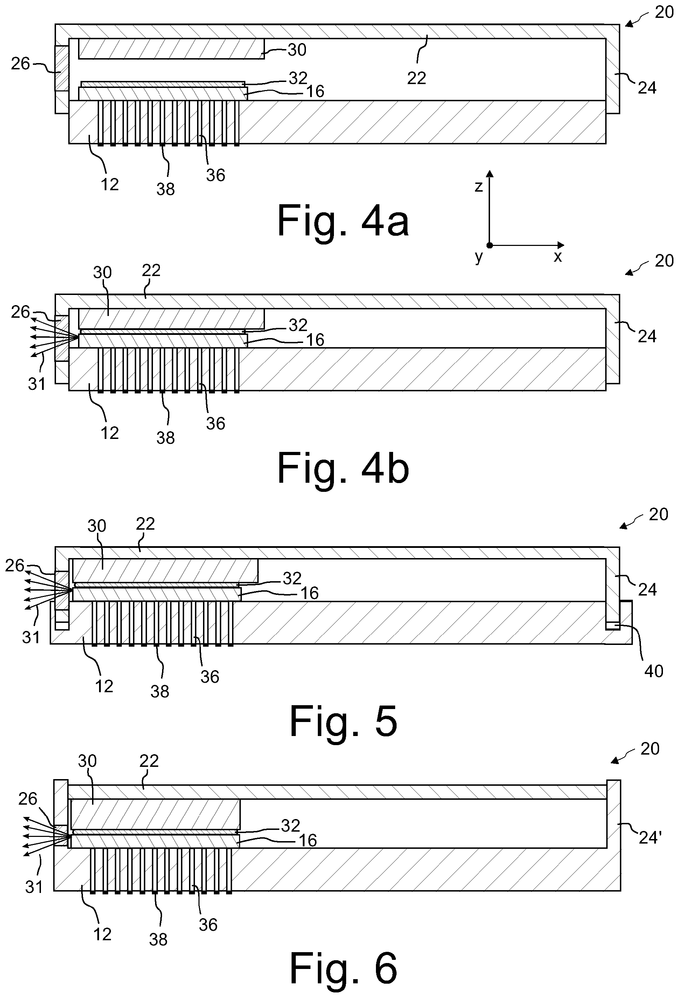

Further embodiments will now be described with reference to the remaining Figures 4 to 7.

Figures 4a and 4b are schematic cross sections through a sensor 10 according to a second embodiment during and after assembly, respectively. In this embodiment, the lid 20 does not rest on the base 12, but is slidably guided on the base 12 before and after the heat transfer element 30 contacts the TIM 32 during assembly of the sensor 10. To this end, the side wall 24 encloses the base 12 without being restricted in its axial movement. Consequently, the lid 20 is free to move with no or little force along the z direction.

The heat transfer element 30 is fixedly attached to the inner surface of the cover member 22 of the lid 20 that points towards the PIC 16. During assembly of the sensor 10, the lid 20 glides on the base 12 until the heat transfer element 30 contacts the TIM 32. An axial force is applied that is sufficient to reduce the thickness of the TIM 32 to a minimum value. As in the first embodiment, the z position of the lid 20 is therefore determined by the TIM 32.

In a third embodiment shown in Figure 5, the side wall 24 does not enclose the base 12, but is received in a circumferential groove 40 that is formed in the base 12. The depth of the groove 40 is so large that the side wall 24 will not abut the bottom of the groove 40 before the thickness of the TIM 32 has its minimum value due to the pressure exerted by the lid 20.

Figure 6 is a schematic cross section through a sensor 10 according to a fourth embodiment. In this embodiment, the side wall 24' including the window 26 is integrally formed with the base 12 and is not part of the lid 20. The lid 20 thus only consists of the cover member 22.

Also in this embodiment, the lid 20 glides on the base 12 (namely, within the side wall 24 of the base 12) before and after the heat transfer element 30 comes into contact with the TIM 32 during assembly of the sensor 10. An axial force is applied to the lid 20 that is sufficient to reduce the thickness of the TIM 32 to a minimum value.

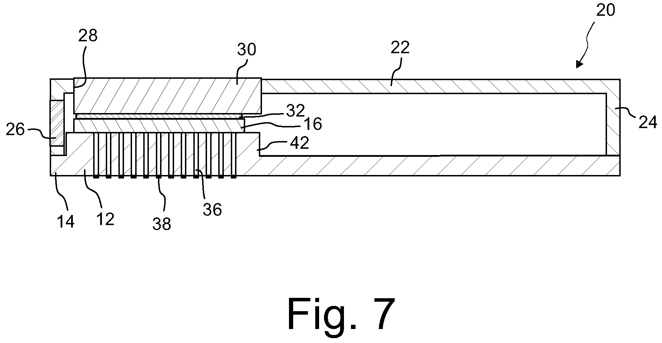

Figure 7 is a schematic cross section through a sensor 10 according to a fifth embodiment. This embodiment is identical to the first embodiment shown in Figures 1 to 3 except that no Kovar^{®} ring 14 is provided. Instead, the side wall 24 of the lid 20 rests directly on the ceramic base 12. In order to ensure that the PIC 16 is positioned sufficiently high for the measuring light to pass through the saphire window 26, the ceramic base 12 is provided with a pedestal 42 which supports the PIC 16.

It is to be understood that also in the embodiments shown in Figures 4a, 4b, 5, 6 and 7, a heat sink 32 supporting a TEC 34 can be attached to the lid 20, as this is shown in Figure 3c.

## Claims

1. A LiDAR sensor (10) for measuring the range to an object by emitting measuring light (31), comprising:
a base (12),
a photonic integrated circuit (16) supported by the base (12),
a lid (20) attached to the base (12) and covering the photonic integrated circuit (16),
a heat transfer element (30) sandwiched between the photonic integrated circuit (16) and the lid (20), and
a soft thermal interface material (32) sandwiched between the photonic integrated circuit (16) and the heat transfer element (30),
wherein
the heat transfer element (30) is slidably guided in an opening (28) in the lid (20), and/or the lid (20) is slidably guided on the base (12), so that an axial position of the heat transfer element (30) is only determined by the thermal interface material (32).

2. The sensor of claim 1, wherein the lid (20) comprises a cover member (22) and a side wall (24) extending from the cover member (22) along the axial direction (z).

3. The sensor of claim 2, wherein the side wall (24) comprises a window (26) that is transparent for the measuring light (31).

4. The sensor of any of the preceding claims, wherein the heat transfer element (30) is slidably guided in an opening (28) in the lid (20), and wherein the lid (20) rests on the base (12) or on a structure (14) that is fixedly attached to the base (20).

5. The sensor of claim 4, wherein the lid (20) rests on the base (20) or on a structure (14) that is fixedly attached to the base (12) before the heat transfer element (30) contacts the thermal interface material (32) during assembly of the sensor (10).

6. The sensor of claim any of claims 1 to 3, wherein the lid (20) is slidably guided on the base (12), and wherein the heat transfer element (30) is fixedly attached to the lid (20) when the lid (20) glides on the base (12) during assembly of the sensor.

7. The sensor of any of the preceding claims, wherein vias (36) extend through a bottom portion of the base (12) that provide for an electrical connection between the photonic integrated circuit (16) and components outside the sensor (10).

8. The sensor of any of the preceding claims, wherein the photonic integrated circuit (16) comprises a plurality of light emitters (26) configured to emit the measuring light (31) and/or at least one semiconductor optical amplifier (19).

9. A method of assembling a LiDAR sensor (10) for measuring the range to an object, comprising the following steps:
a) providing a base (12);
b) securing a photonic integrated circuit (16) to the base (12);
c) providing a lid (20) covering the photonic integrated circuit (16);
d) applying a soft thermal interface material (32) on the photonic integrated circuit (16); and
e) pressing a heat transfer element (30) on the thermal interface material (32) by sliding the heat transfer element (30) through an opening (28) of the lid (20), or by sliding the lid (20) on the base (12), along an axial direction (x) perpendicular to the base (12) so that an axial position of the heat transfer element (30) is only determined by the thermal interface material (32).

10. The method of claim 9, wherein the lid (20) comprises a cover member (20) and a side wall (24) extending from the cover member (20) along the axial direction (z).

11. The apparatus of claim 9 or 10, wherein the heat transfer element (30) slides through an opening (28) in the lid (20) while the lid (20) rests on the base (12) or on a structure 814) that is fixedly attached to the base (12).

12. The method of any of claims 9 to 11, wherein the lid (20) slides on the base (12) after the heat transfer element (30) has contacted the thermal interface material (32).
